# EUROPÄISCHE PATENTSCHRIFT

(11) **EP 3 970 113 B1**
(45) Veröffentlichungstag und Bekanntmachung des Hinweises auf die Patenterteilung: **03.05.2023**
(21) Anmeldenummer: 20754620.1
(22) Anmeldetag: 22.07.2020
(51) Int. Cl.: G06T 7/00

(54) **BESTIMMUNG EINES VERSCHLEISSGRADES EINES WERKZEUGS**
DETERMINING THE LEVEL OF WEAR OF A TOOL
DÉTERMINATION DU NIVEAU D'USURE D'UN OUTIL

(30) Priorität: 02.08.2019 DE 102019211656
(43) Veröffentlichungstag der Anmeldung: 23.03.2022
(73) Patentinhaber: Siemens Aktiengesellschaft, 80333 München (DE)
(72) Erfinder: LUTZ, Benjamin Samuel, 81739 München (DE); REGULIN, Daniel, 81825 München (DE)
(74) Vertreter: Siemens Patent Attorneys
(86) Internationale Anmeldenummer: PCT/EP2020/070666
(87) Internationale Veröffentlichungsnummer: WO 2021/023514

(56) Entgegenhaltungen:
- DEEGAN J ATHA ET AL: "Evaluation of deep learning approaches based on convolutional neural networks for corrosion detection", SHM. STRUCTURAL HEALTH MONITORING, Bd. 17, Nr. 5, 5. September 2018 (2018-09-05), Seiten 1110-1128, XP055740054, GB ISSN: 1475-9217, DOI: 10.1177/1475921717737051
- WILL NASH ET AL: "A review of deep learning in the study of materials degradation", NPJ MATERIALS DEGRADATION, Bd. 2, Nr. 1, 15. November 2018 (2018-11-15), XP055689360, DOI: 10.1038/s41529-018-0058-x

## Beschreibung

Die vorliegende Erfindung betrifft ein computerimplementiertes Verfahren zur Bestimmung eines Verschleißgrades eines Werkzeugs, wobei ein Bilddatensatz bereitgestellt wird, welcher einen verschleißrelevanten Bereich des Werkzeugs abbildet. Die Erfindung betrifft außerdem ein computerimplementiertes Verfahren zum Trainieren eines künstlichen neuronalen Netzwerks zur Bestimmung eines Verschleißgrades eines Werkzeugs, ein Analysesystem zur Bestimmung eines Verschleißgrades eines Werkzeugs sowie ein Computerprogramm.

Werkzeugverschleiß trägt in der industriellen Fertigung wesentlich zu den Produktionskosten bei. Der Werkzeugverschleiß hängt neben der vergangenen Einsatzzeit des Werkzeugs beispielsweise von dem bearbeiteten Material und den Bearbeitungsparametern ab und steigt kontinuierlich an, allerdings in der Regel nicht linear. Erreicht der Werkzeugverschleiß einen vorher festgelegten zulässigen Maximalverschleiß, so ist das Werkzeug verschlissen. Wird ein verschlissenes Werkzeug weiter verwendet, so sinken Bauteilqualität und Bearbeitungsleistung signifikant.

Um dies zu vermeiden werden Werkzeuge häufig ausgewechselt, bevor dies in Hinblick auf den Maximalverschleiß notwendig wäre. Dadurch steigen die Werkzeugkosten aufgrund der nicht genutzten Einsatzzeit des Werkzeugs. Auch die Abhängigkeit des Verschleißanstiegs von dem zu bearbeitenden Material und eine Chargenabhängigkeit bei identisch spezifizierten Werkzeugen führen zu Schwierigkeiten bei der Abschätzung des Verschleißgrades und in der Konsequenz dazu, dass Werkzeuge tendenziell zu für ausgewechselt werden.

Der Verschleißgrad von Werkzeugen wird in der industriellen Fertigung mittels Berechnungsverfahren abgeschätzt. Dazu werden Maschinensignale wie beispielsweise Vibrationen, akustische Emissionen, Schnittkräfte, Maschinenströme und dergleichen ausgewertet. Aufgrund der indirekten Natur dieser Verfahren ist eine Abschätzung des Verschleißgrades jedoch nicht mit hoher Genauigkeit möglich. Zudem sind die eingesetzten Verfahren häufig limitiert in der Anwendung auf bestimmte Werkzeugarten oder Schneidengeometrien.

Im Dokument US 2016/0091393 A1 wird beispielsweise ein Verfahren beschrieben, bei dem Betriebsparameter einer Maschine, insbesondere Positionsparameter und Bewegungsparameter, beispielsweise Spindelgeschwindigkeit oder Vorschubrate, bestimmt werden. Mittels einer Clusteranalyse werden Parameter extrahiert, deren Trend zur Abschätzung des Verschleißgrades herangezogen wird.

In dem Dokument "Evaluation of deep learning approaches based on convolutional neural networks for corrosion detection", von DEEGAN J ATHA ET AL: SHM. STRUCTURAL HEALTH MONITORING, Bd. 17, Nr. 5, 5. September 2018 (2018-09-05), Seiten 1110-1128, wird eine Evaluierung von konventionellen neuronalen Netzwerken für einen Nachweis von Korrosion metallischer Oberflächen. Dabei werden gleitende Ausschnitte ("sliding windows") in zwei Klassen (korrodiert / nicht-korrodiert) eingeteilt.

In anderen Ansätzen werden Werkzeuge mittels eines Laserstrahls vermessen, was es erlaubt, Fehlerfälle wie beispielsweise einen Bruch des Werkzeugs zu erkennen. Eine exakte Bestimmung des Verschleißgrades ist so jedoch nicht möglich.

Vor diesem Hintergrund ist es eine Aufgabe der vorliegenden Erfindung, ein verbessertes Konzept zum Bestimmen eines Verschleißgrades eines Werkzeugs anzugeben, das flexibel auf verschiedene Werkzeugarten anwendbar ist und eine genauere Bestimmung des Verschleißgrades ermöglicht.

Erfindungsgemäß wird diese Aufgabe gelöst durch den jeweiligen Gegenstand der unabhängigen Ansprüche. Vorteilhafte Ausgestaltungen und weitere Ausführungsformen sind Gegenstand der abhängigen Ansprüche.

Das verbesserte Konzept beruht auf der Idee, Bilddaten, welche das Werkzeug abbilden, durch ein künstliches neuronales Netzwerk zu analysieren, wobei einer Vielzahl von Bildpunkten des Bilddatensatzes mittels des neuronalen Netzwerks jeweils eine Klasse zugeordnet wird. Basierend auf einem Ergebnis der Analyse wird ein Kennwert für den Verschleißgrad bestimmt.

Gemäß einem ersten unabhängigen Aspekt des verbesserten Konzepts wird ein computerimplementiertes Verfahren zur Bestimmung eines Verschleißgrades eines Werkzeugs gemäß Anspruch 1 angegeben.

Bei dem Bilddatensatz handelt es sich insbesondere um ein digitales Bild eines Bildsensors, beispielsweise eines CMOS-Sensors, beispielsweise einer Kamera, also insbesondere um ein digitales Kamerabild. Der Bilddatensatz weist eine zweidimensionale Anordnung von Bildpunkten, die auch als Pixel bezeichnet werden können, auf, wobei die Anordnung von Bildpunkten insbesondere in Spalten und Zeilen vorliegt.

Die Vielzahl von Bildpunkten kann beispielsweise alle Bildpunkte des Bilddatensatzes oder eine vordefinierte Untermenge der Bildpunkte des Bilddatensatzes beinhalten. Beispielsweise kann die Vielzahl einen vorgegebenen Bruchteil von Bildpunkten des Bilddatensatzes beinhalten, beispielsweise jeden zweiten Bildpunkt, jeden vierten Bildpunkt oder dergleichen. Falls die Vielzahl von Bildpunkten eine Untermengen von Bildpunkten der Bildpunkte des Bilddatensatzes beinhaltet und nicht alle Bildpunkte des Bilddatensatzes, so können die Bildpunkte der Vielzahl beispielsweise räumlich gleichverteilt oder näherungsweise gleichverteilt sein.

Bei dem Werkzeug kann es sich um ein Bearbeitungswerkzeug für eine Werkzeugmaschine handeln, beispielsweise um ein Schneidwerkzeug, wie beispielsweise um ein Drehwerkzeug, einen Drehmeißel, eine Fräse oder einen Bohrer. Insbesondere kann es sich um eine Wendeschneidplatte handeln.

Bei dem verschleißrelevanten Bereich des Werkzeugs handelt es sich insbesondere um einen Bereich, beispielsweise eine Oberfläche, des Werkzeugs, der dem Verschleiß unterliegt, der sich also durch bestimmungsgemäße Benutzung des Werkzeugs verändert und dessen Veränderung eine Funktion, Brauchbarkeit, Belastbarkeit oder Leistung des Werkzeugs einschränken kann oder dessen Veränderung mit einer eingeschränkten Funktion, Brauchbarkeit, Leistung oder Belastbarkeit korreliert.

Insbesondere kann es sich bei dem verschleißrelevanten Bereich um eine Schneide oder einen Teil einer Schneide eines Schneidwerkzeugs, beispielsweise einer Wendeschneidplatte, eines Bohrers, eines Fräswerkzeugs oder eines Drehwerkezeugs handeln.

Das Bereitstellen des Bilddatensatzes beinhaltet insbesondere das Bereitstellen des Bilddatensatzes in computerlesbarer Form, insbesondere derart, dass er von der Recheneinheit zur Verarbeitung mittels des neuronalen Netzwerks gelesen werden kann.

Das Bereitstellen des Bilddatensatzes beinhaltet insbesondere das Speichern des Bilddatensatzes auf einem Speichermedium oder einer Speichereinheit und das Bereitstellen des Speichermediums oder der Speichereinheit.

Ein Bildpunkt kann beispielsweise einem einzelnen Abtastwert eines Bildsensors, im Falle eines CMOS-Sensors beispielsweise einen mittels eines Fotodetektors oder einer Fotodiode gemessenen Wert, entsprechend. Der Bilddatensatz kann jedoch auch vorverarbeitet sein, sodass beispielsweise einzelne Abtastwerte zu effektiven Bildpunkten zusammengefasst sind, und ein Bildpunkt in dem hier zugrunde gelegten Verständnis auch einem effektiven Bildpunkt entsprechen kann.

Indem der Vielzahl von Bildpunkten jeweils eine Klasse zugeordnet wird, wird insbesondere jedem einzelnen der Bildpunkte der Vielzahl von Bildpunkten einzeln eine der Klassen zugeordnet. Beispielsweise kann für jede Zuordnung eines Bildpunkts zu einer Klasse mittels der Recheneinheit ein Kennwert für eine Wahrscheinlichkeit bestimmt werden, mit der die Zuordnung korrekt ist.

Das neuronale Netzwerk kann beispielsweise als Softwarecode oder Zusammenstellung mehrerer Softwarecodekomponenten verstanden werden, wobei der Softwarecode beziehungsweise die Softwarecodekomponenten in computerlesbarer Form gespeichert sind, beispielsweise auf dem Speichermedium oder der Speichereinheit. Das neuronale Netzwerk kann insbesondere als Softwaremodul verstanden werden oder eines oder mehrere Softwaremodule beinhalten. Die Recheneinheit kann das neuronale Netzwerk lesen beziehungsweise ausführen, also den Softwarecode beziehungsweise die Softwarecodekomponenten ausführen.

Das neuronale Netzwerk ist insbesondere als faltendes neuronales Netzwerk, CNN, ausgestaltet. Dies bedeutet, dass das neuronale Netzwerk mindestens eine faltende Lage oder Schicht aufweist. Insbesondere kann das neuronale Netzwerk auch konventionelle, insbesondere nichtfaltende, Lagen oder Schichten aufweisen, beispielsweise vollverbundene verstecke Ebenen, beispielsweise eine oder mehrere vollverbundene Ebenen. Dennoch wird das neuronale Netzwerk im Folgenden auch in diesen Fällen als faltendes neuronales Netzwerk oder CNN bezeichnet.

Das Ergebnis der Zuordnung beinhaltet insbesondere Informationen betreffend die Zuordnung oder das Zuordnungsergebnis der einzelnen Bildpunkte zu den jeweiligen Klassen. Das Ergebnis der Zuordnung kann beispielsweise für jeden Bildpunkt der Vielzahl von Bildpunkten die Information beinhalten, welche Klasse der vorgegebenen Menge von Klassen diesem Bildpunkt zugeordnet wurde. Das Ergebnis kann auch die jeweiligen Kennwerte für die Wahrscheinlichkeit, dass die Zuordnung korrekt ist beinhalten.

Im Gegensatz zu aus dem Stand der Technik bekannten Ansätzen wird mittels des verbesserten Konzepts keine indirekte Hochrechnung basierend auf sonstigen Maschinenparametern verwendet, um den Verschleißgrad abzuschätzen, sondern der verschleißrelevante Bereich des Werkzeugs wird direkt visuell analysiert. Dadurch spielt ein komplizierter, nichtlinearer Zusammenhang zwischen vergangener Einsatzzeit des Werkzeugs und Verschleißzunahme für die Analyse nach dem verbesserten Konzept keine Rolle, ebenso wie Chargenabhängigkeiten. In der Folge wird eine deutlich genauere Analyse beziehungsweise Bestimmung des Verschleißgrades möglich.

Dadurch kann insbesondere vermieden werden, dass das Werkzeug unnötig früh ausgetauscht wird. Dies führt zu Kosteneinsparungen, die, insbesondere im industriellen Fertigungsumfeld, signifikant sein können. Werkzeugköpfe moderner Werkzeugmaschinen können beispielsweise bis zu 50 Schneiden aufweisen, die in einem zeitlichen Abstand gewechselt werden der, je nach Werkzeugmaterial und Werkstoff, wenige Minuten bis zu mehreren Stunden betragen kann.

Das verbesserte Konzept erlaubt die Bestimmung des Verschleißgrades auch unabhängig von äußeren Störungen oder Umwelteinflüssen. Zudem können mit dem verbesserten Konzept unterschiedliche Verschleißarten identifiziert werden.

Durch die Verwendung des künstlichen neuronalen Netzwerks wird die direkte visuelle Analyse des verschleißrelevanten Bereichs möglich und dies ohne, dass eine prinzipielle Einschränkung auf eine bestimmte Werkzeugart oder Schneidengeometrie gegeben ist. Dies macht das verbesserte Konzept sehr flexibel einsetzbar.

Nach dem verbesserten Konzept wird nicht das gesamte Bild, also der gesamte Bilddatensatz, einer Klasse zugeordnet. Stattdessen wird jedem Bildpunkt der Vielzahl von Bildpunkten unabhängig voneinander eine eigene Klasse zugeordnet. Durch diese pixelweise Analyse ist der Rechenaufwand insbesondere beim Training des neuronalen Netzwerks reduziert. Außerdem lässt sich in dieser Weise eine besonders genaue Analyse und damit genauere Bestimmung des Verschleißgrades realisieren.

Gemäß zumindest einer Ausführungsform wird der Bilddatensatz mit einer Auflösung in einem Bereich zwischen 1 Bildpunkt/mm bis 500 Bildpunkte/mm, beispielsweise 50 Bildpunkte/mm bis 150 Bildpunkte/mm, vorzugsweise ungefähr 100 Bildpunkte/mm bereitgestellt.

Durch eine entsprechend hohe Auflösung wird eine exakte und zuverlässige Bestimmung des Verschleißgrades ermöglicht.

Die wenigstens eine Verschleißklasse kann beispielsweise genau eine Verschleißklasse oder mehr als eine Verschleißklasse aufweisen, wobei unterschiedliche Verschleißklassen unterschiedlichen Arten von Verschleißindikatoren, unterschiedlichen Verschleißmechanismen oder unterschiedlichen Verschleißarten entsprechen können.

Die vorgegebene Menge von Klassen kann neben der wenigstens einen Verschleißklasse beispielsweise eine Hintergrundklasse und/oder eine Klasse für eine unbeschädigte Werkzeugoberfläche beinhalten.

Die Hintergrundklasse wird einem Bildpunkt beispielsweise zugeordnet, wenn der entsprechende Bildpunkt nicht auf dem Werkzeug liegt.

Die Klasse für die unbeschädigte Werkzeugoberfläche wird einem Bildpunkt beispielsweise zugeordnet, wenn der jeweilige Bildpunkt auf dem Werkzeug liegt und keinen Verschleiß anzeigt.

Die jeweilige Verschleißklasse der wenigstens einen Verschleißklasse wird einem Bildpunkt dann zugeordnet, wenn der Bildpunkt auf dem Werkzeug liegt und ein entsprechender Verschleiß an dem Punkt des Werkzeugs gegeben ist.

Gemäß zumindest einer Ausführungsform weist das Werkzeug ein Bearbeitungswerkzeug für eine Werkzeugmaschine auf, insbesondere ein Schneidwerkzeug, beispielsweise eine Wendeschneidplatte, beispielsweise für eine Dreh- oder Fräsmaschine.

Gemäß zumindest einer Ausführungsform wird das neuronale Netzwerk mittels der Recheneinheit für jeden der Bildpunkte der Vielzahl von Bildpunkten auf einen Umgebungsbereich des jeweiligen Bildpunkts angewandt, um den jeweiligen Bildpunkt einer der Klassen der vorgegebenen Mengen von Klassen zuzuordnen.

Bei dem Umgebungsbereich handelt es sich insbesondere um eine den jeweiligen Bildpunkt enthaltende Untermenge der Vielzahl von Bildpunkten die nach einer vorgegebenen Vorschrift ausgewählt oder definiert ist.

Dadurch, dass eine definierte Umgebung des Bildpunkts als Eingabe für das neuronale Netzwerk verwendet wird, kann die Bildinformation des Bildpunkts effektiv mit seinen Umgebungspunkten verglichen und ausgewertet werden. Relative Bildinformationen in der Umgebung werden genutzt, um den Bildpunkt zu charakterisieren beziehungsweise zu klassifizieren.

Gemäß zumindest einer Ausführungsform ist die Untermenge für den jeweiligen Bildpunkt eine zusammenhängende Untermenge. Das bedeutet, dass jeder Bildpunkt der Untermenge wenigstens einen benachbarten Bildpunkt der Vielzahl von Bildpunkten aufweist, der ebenfalls Teil der Untermenge ist.

Gemäß zumindest einer Ausführungsform ist der jeweilige Bildpunkt, auf dessen Umgebungsbereich des neuronale Netzwerk angewandt wird, entweder von den übrigen Bildpunkten der Untermenge umgeben oder eingeschlossen oder er ist ein Randpunkt der Vielzahl von Bildpunkten.

Als Randpunkt kann dabei beispielsweise ein Bildpunkt des Bilddatensatzes verstanden werden, der einem ersten oder letzten Bildpunkt in einer Zeile oder Spalte entspricht.

Gemäß zumindest einer Ausführungsform enthält der Umgebungsbereich den jeweiligen Bildpunkt, auf dessen Umgebung das neuronale Netzwerk angewandt wird, sowie alle an den jeweiligen Bildpunkt angrenzenden, insbesondere unmittelbar angrenzenden, Bildpunkte der Vielzahl von Bildpunkten. Sind die Bildpunkte der Vielzahl von Bildpunkten wie beschrieben in Zeilen und Spalten angeordnet, so weist der jeweilige Bildpunkt acht unmittelbar aneinander angrenzende Bildpunkte auf, sodass die Untermenge in diesem Fall beispielsweise neun Bildpunkte enthält.

Gemäß zumindest einer Ausführungsform enthält der Umgebungsbereich zusätzlich zu den angrenzenden Bildpunkten des jeweiligen Bildpunkts auch alle angrenzenden Bildpunkte der angrenzenden Bildpunkte.

Mit anderen Worten enthält der Umgebungsbereich den jeweiligen Bildpunkt sowie die nächsten und übernächsten Nachbarbildpunkte. Im Falle der Anordnung der Bildpunkte in Zeilen und Spalten enthält der Umgebungsbereich also beispielsweise 25 Bildpunkte.

Gemäß zumindest einer Ausführungsform enthält der Umgebungsbereich den jeweiligen Bildpunkt sowie alle übrigen Bildpunkte der Vielzahl von Bildpunkten, die einen Abstand zu dem jeweiligen Bildpunkt haben, der kleiner ist als ein vorgegebener Maximalabstand.

Der Umgebungsbereich kann als gleitendes Fenster betrachtet werden, das Schritt für Schritt über den gesamten Bilddatensatz gefahren wird, wobei für jede Position des Fensters dem entsprechenden Bildausschnitt eine Klasse zugeordnet wird.

Gemäß zumindest einer Ausführungsform enthält der Umgebungsbereich den jeweiligen Bildpunkt sowie alle übrigen Bildpunkte der Vielzahl von Bildpunkten, die einen Zeilenabstand zu dem jeweiligen Bildpunkt haben, der kleiner ist als ein vorgegebener maximaler Zeilenabstand und die einen Spaltenabstand zu dem jeweiligen Bildpunkt haben, der kleiner ist als ein vorgegebener maximaler Spaltenabstand.

Der Umgebungsbereich hat in solchen Ausführungen beispielsweise eine rechteckige Form.

Gemäß zumindest einer Ausführungsform wird das Ergebnis der Zuordnung mittels der Recheneinheit anhand einer morphologischen Bildverarbeitungsoperation bearbeitet und der wenigstens eine Kennwert für den Verschleißgrad wird mittels der Recheneinheit basierend auf dem bearbeiteten Ergebnis bestimmt.

Gemäß zumindest einer Ausführungsform enthält die morphologische Bildverarbeitungsoperation eine Erosionsoperation und/oder eine Dilatationsoperation.

Gemäß zumindest einer Ausführungsform enthält die morphologische Bildverarbeitungsoperation eine Öffnungsoperation oder Opening-Operation, also insbesondere eine Erosionsoperation gefolgt von einer Dilatationsoperation.

Durch, gegebenenfalls mehrfaches, Anwenden der morphologischen Bildverarbeitungsoperation können fehlerhafte Klassifizierungen korrigiert werden und ein Rauschen in dem Ergebnis der Zuordnung kann verringert werden. Somit kann eine höhere Genauigkeit der Klassifizierung und dementsprechend der Bestimmung des Verschleißgrades erzielt werden.

Gemäß zumindest einer Ausführungsform wird basierend auf der Zuordnung der Klassen zu den Bildpunkten der Vielzahl von Bildpunkten, also basierend auf dem Ergebnis der Zuordnung, ein Klassenbild erzeugt, wobei das Klassenbild einer Kopie des Bilddatensatzes entspricht, in der jeder Bildpunkt gemäß der ihm zugeordneten Klasse markiert oder hervorgehoben ist, beispielsweise farblich hervorgehoben.

Um das Ergebnis der Zuordnung anhand der morphologischen Bildverarbeitungsoperation zu bearbeiten, kann beispielsweise das Klassenbild mittels der morphologischen Bildverarbeitungsoperation bearbeitet werden.

Gemäß zumindest einer Ausführungsform kann das Klassenbild und/oder das anhand der morphologischen Bildverarbeitungsoperation bearbeitete Klassenbild an einen Benutzer ausgegeben werden, beispielsweise mittels einer Benutzerschnittstelle, insbesondere eines Displays oder einer Anzeigeeinheit der Benutzerschnittstelle. Anhand der Ausgabe kann der Benutzer nachvollziehen, welches Ergebnis die Zuordnung beziehungsweise das Verfahren nach dem verbesserten Konzept erzielt hat und welche Schlussfolgerungen oder Empfehlungen gegebenenfalls basierend darauf ausgegeben werden.

Gemäß zumindest einer Ausführungsform wird mittels der Recheneinheit ein Anteil der Bildpunkte der Vielzahl von Bildpunkten bestimmt, die der wenigsten einen Verschleißklasse, also insbesondere einer Verschleißklasse der wenigstens einen Verschleißklasse, zugeordnet wurden. Mittels der Recheneinheit wird basierend auf dem Anteil eine Verschleißfläche, beispielsweise eine effektive Verschleißfläche, als Kennwert für den Verschleißgrad bestimmt, also als Kennwert des wenigstens einen Kennwerts.

Mit anderen Worten enthält das Ergebnis der Zuordnung den Anteil der Bildpunkte, die der wenigstens einen Verschleißklasse zugeordnet wurden, und der wenigstens eine Kennwert enthält die Verschleißfläche.

In Ausführungsformen, in denen die morphologische Bildverarbeitungsoperation angewandt wird, ist die Verschleißfläche beziehungsweise deren Bestimmung derart zu verstehen, dass die Verschleißfläche auf demjenigen Anteil der Bildpunkte der Vielzahl von Bildpunkten bestimmt wird, die der wenigstens einen Verschleißklasse zugeordnet wurden und die nach der Bearbeitung durch die morphologische Bildverarbeitungsoperation immer noch einer der wenigstens einen Verschleißklasse zugeordnet sind.

Entsprechendes gilt auch für die Bestimmung weiterer Kennwerte für den Verschleißgrad, insbesondere der Verschleißmarkenbreite.

Der Anteil kann beispielsweise berechnet werden als die Anzahl derjenigen Punkte, die der wenigstens einen Verschleißklasse zugeordnet wurden geteilt durch die Anzahl aller Bildpunkte der Vielzahl von Bildpunkten. Die Verschleißfläche ist dann insbesondere direkt proportional zu dem Anteil multipliziert mit der Anzahl aller Bildpunkte der Vielzahl von Bildpunkten geteilt durch die Anzahl der Werkzeugbildpunkte. Die Anzahl der Werkzeugbildpunkte entspricht dabei der Anzahl von Bildpunkten, die der wenigstens einen Verschleißklasse oder der Klasse für die unbeschädigte Werkzeugoberfläche zugeordnet.

In alternativen Ausführungsformen kann der Anteil auch als Anzahl derjenigen Bildpunkte, die der wenigstens einen Verschleißklasse zugeordnet wurden geteilt durch die Anzahl der Werkzeugbildpunkte berechnet werden. Die Fläche ist dann direkt proportional zu dem Anteil.

Die Verschleißfläche gibt je Werkzeugs direkt Auskunft über die restliche Einsatzzeit des Werkzeugs und/oder kann ein signifikanter Indikator für den aktuellen Verschleißgrad des Werkzeugs sein.

Gemäß zumindest einer Ausführungsform wird mittels der Recheneinheit für eine Spalte oder eine Zeile von Bildpunkten der Vielzahl von Bildpunkten ein weiterer Anteil von Bildpunkten bestimmt, die der wenigsten einen Verschleißklasse zugeordnet wurden. Basierend auf dem weiteren Anteil wird eine Verschleißmarkenbreite der Spalte oder Zeile bestimmt. Ein weiterer Kennwert des wenigstens einen Kennwerts für den Verschleißgrad wird mittels der Recheneinheit basierend auf der Verschleißmarkenbreite der Zeile oder Spalte bestimmt.

Mit anderen Worten enthält das Ergebnis der Zuordnung die Anzahl von Bildpunkten der Spalte oder Zeile, die einer der wenigstens einen Verschleißklassen zugeordnet wurde, und der wenigstens eine Kennwert enthält die Verschleißmarkenbreite der Spalte oder Zeile. Die Verschleißmarkenbreite kann beispielsweise in Längeneinheiten, also in Meter oder Millimeter, angegeben werden oder in Einheiten von Bildpunkten.

Die Verschleißmarkenbreite ist insbesondere direkt proportional zu dem weiteren Anteil.

Je nach Werkzeug kann die Verschleißmarkenbreite, insbesondere zusammen mit entsprechend berechneten Verschleißmarkenbreiten weiterer Zeilen oder Spalten, ein aussagekräftiger Indikator für den Verschleißgrad des Werkzeugs sein.

Gemäß zumindest einer Ausführungsform wird mittels der Recheneinheit für wenigstens eine weitere Spalte oder Zeile von Bildpunkten der Vielzahl von Bildpunkten ein jeweiliger weiterer Anteil von Bildpunkten bestimmt, die der wenigsten einen Verschleißklasse zugeordnet wurden. Mittels der Recheneinheit wird basierend auf den jeweiligen weiteren Anteilen eine jeweilige weitere Verschleißmarkenbreite der jeweiligen weiteren Spalte oder Zeile bestimmt. Mittels der Recheneinheit wird der weitere Kennwert basierend auf der Verschleißmarkenbreite und den weiteren Verschleißmarkenbreiten bestimmt.

Durch die Berücksichtigung weiterer Verschleißmarkenbreiten wird die Zuverlässigkeit und Aussagekraft des weiteren Kennwerts erhöht.

Insbesondere wird die Verschleißmarkenbreite für jede Spalte von Bildpunkten der Vielzahl von Bildpunkten oder für jede Zeile der Vielzahl von Bildpunkten bestimmt und der weitere Kennwert wird basierend auf all diesen Verschleißmarkenbreiten bestimmt.

Ob zum Berechnen der Verschleißmarkenbreite Zeilen oder Spalten von Bildpunkten herangezogen werden, hängt von der jeweiligen Orientierung des Werkzeugs innerhalb des Bildes ab und/oder von einer Vorverarbeitung des Bilddatensatzes.

Gemäß zumindest einer Ausführungsform enthält der wenigstens eine Kennwert für den Verschleißgrad, insbesondere der weitere Kennwert, eine statistische Kenngröße aller bestimmten Verschleißmarkenbreiten, beispielsweise einen Maximalwert, einen Mittelwert oder einen Medianwert.

Gemäß zumindest einer Ausführungsform enthält das Ergebnis der Zuordnung eine Verteilung der Bildpunkte der Vielzahl von Bildpunkten auf alle Verschleißklassen der wenigstens einen Verschleißklasse oder eine von der Verteilung abgeleitete Größe.

Gemäß zumindest einer Ausführungsform wird der verschleißrelevante Bereich mittels einer Kamera abgebildet, insbesondere einer Mikroskopkameravorrichtung, um den Bilddatensatz zu erzeugen und bereitzustellen.

Die Mikroskopkameravorrichtung enthält insbesondere eine Mikroskopkamera beziehungsweise ein Mikroskop und eine Kamera, die mit dem Mikroskop gekoppelt ist.

Dadurch wird eine exakte und detailreiche Darstellung des verschleißrelevanten Bereichs und dementsprechend eine hohe Genauigkeit der Bestimmung des Verschleißgrades erreicht.

Gemäß zumindest einer Ausführungsform wird der wenigstens eine Kennwert mit wenigstens einem vorgegebenen Grenzwert mittels der Recheneinheit verglichen. Mittels der Recheneinheit wird ein Wert, der eine verbleibende Einsatzzeit des Werkzeugs betrifft abhängig von einem Ergebnis des Vergleichs bestimmt.

Die verbleibende Einsatzzeit des Werkzeugs entspricht insbesondere einer verbleibenden Zeit, bis ein vordefinierter Maximalverschleiß des Werkzeugs voraussichtlich erreicht ist.

Der die verbleibende Einsatzzeit des Werkzeugs betreffende Wert kann beispielsweise einem binären Wert entsprechen und dementsprechend aussagen, ob der Maximalverschleiß erreicht ist oder nicht.

Der die verbleibende Einsatzzeit betreffende Wert kann auch eine Zeit, beispielsweise in Stunden, Minuten und/oder Sekunden beinhalten, und/oder einen Zeitanteil in Prozent, insbesondere bezogen auf eine gesamte Einsatzzeit des Werkzeugs.

Indem der wenigstens eine Kennwert mit dem wenigstens einen Grenzwert verglichen wird, wird insbesondere jeder Kennwert des wenigstens einen Kennwerts mit einem zugehörigen Grenzwert des wenigstens einen vorgegebenen Grenzwerts verglichen.

Verschiedene Grenzwerte des wenigstens einen Grenzwerts können auch voneinander abhängen oder bezüglich einander definiert sein.

Durch die Bestimmung des Werts, der die verbleibende Einsatzzeit betrifft, kann eine Entscheidung getroffen werden, ob das Werkzeug ausgetauscht werden muss, oder ob es noch weiter verwendet werden kann, beziehungsweise wann mit einem Austausch zu rechnen ist.

Gemäß zumindest einer Ausführungsform wird mittels der Recheneinheit abhängig von einem Ergebnis des Vergleichs des wenigstens einen Kennwerts mit dem wenigstens einen vorgegebenen Grenzwert eine Austauschempfehlung für das Werkzeug abgegeben.

Insbesondere kann die Austauschempfehlung als visuelles Signal auf der Benutzerschnittstelle ausgegeben werden.

Beispielsweise kann anhand der Austauschempfehlung empfohlen werden, das Werkzeug auszutauschen, wenn einer oder mehrere der Kennwerte größer oder gleich dem zugehörigen Grenzwert sind.

Gemäß einem weiteren unabhängigen Aspekt des verbesserten Konzepts wird ein computerimplementiertes Verfahren zum Trainieren eines künstlichen neuronalen Netzwerks zur Bestimmung eines Verschleißgrades eines Werkzeugs angegeben. Dabei wird ein Trainingsbilddatensatz bereitgestellt, der einen verschleißrelevanten Bereich eines Referenzwerkzeugs abbildet. Eine Referenzzuordnung jedes Bildpunkts einer Vielzahl von Bildpunkten des Trainingsbilddatensatzes zu jeweils einer Klasse einer vorgegebenen Menge von Klassen wird bereitgestellt, wobei die Menge von Klassen wenigstens eine Verschleißklasse enthält. Mittels einer Trainingsrecheneinheit wird für jeden der Bildpunkte der Vielzahl von Bildpunkte eine Ausgabe des neuronalen Netzwerks berechnet und die Ausgabe wird mit der Referenzzuordnung verglichen. Mittels der Trainingsrecheneinheit wird das neuronale Netzwerk abhängig von einem Ergebnis des Vergleichs angepasst, um das neuronale Netzwerk zu trainieren.

Bei der Trainingsrecheneinheit kann es sich um die Recheneinheit handeln oder um eine davon unabhängige weitere Recheneinheit.

Durch die Referenzzuordnung, welche beispielsweise als Datei auf einem Speichermedium oder einer Speichereinheit gespeichert sein kann, wird jedem Bildpunkt der Vielzahl von Bildpunkten eine vorgegebene Klasse der Menge von Klassen zugeordnet. Die jeweilige Referenzzuordnung für einen Bildpunkt kann also als Label oder Target für das Training des neuronalen Netzwerks verstanden werden.

Die Ausgabe des neuronalen Netzwerks für einen der Bildpunkte entspricht einer anscheinenden Klasse, die das Netzwerk im untrainierten oder teilweise trainierten Zustand dem jeweiligen Bildpunkt zuordnen würde. Diese Ausgabe wird mit der Referenzzuordnung verglichen, indem die anscheinende Klasse des jeweiligen Bildpunkts mit der gemäß der Referenzzuordnung zugeordneten Klasse verglichen wird.

Das neuronale Netzwerk wird insbesondere angepasst, indem die Gewichte der einzelnen Neuronen des neuronalen Netzwerks verändert werden, um eine Abweichung der Ausgabe von der Referenzzuordnung des jeweiligen Bildpunkts zu verkleinern.

Um die Ausgabe des neuronalen Netzwerks zu berechnen, wird, insbesondere wie oben bezüglich des computerimplementierten Verfahrens zur Bestimmung eines Verschleißgrades beschrieben, das neuronale Netzwerk auf einen Umgebungsbereich des jeweiligen Bildpunkts angewandt.

Gemäß zumindest einer Ausführungsform des Verfahrens zum Bestimmen eines Verschleißgrades eines Werkzeugs wird das neuronale Netzwerk mittels eines Verfahrens zum Trainieren eines künstlichen neuronalen Netzwerks nach dem verbesserten Konzept trainiert. Die Verfahrensschritte des Verfahrens zum Trainieren des neuronalen Netzwerks sind dann auch Verfahrensschritte des Verfahrens zum Bestimmen des Verschleißgrades.

Insbesondere erfolgt das Trainieren des künstlichen neuronalen Netzwerks vor dem Zuordnen des Bildpunkts des Bilddatensatzes zu den entsprechenden Klassen. Zusätzlich ist jedoch auch eine Wiederholung des Trainings zu einem späteren Zeitpunkt möglich, um das Modell des neuronalen Netzwerks zu optimieren.

Gemäß zumindest einer Ausführungsform des Verfahrens zum Bestimmen eines Verschleißgrades eines Werkzeugs wurde das neuronale Netzwerk mittels eines Verfahrens zum Trainieren eines künstlichen neuronalen Netzwerks nach dem verbesserten Konzept trainiert. Die Verfahrensschritte des Verfahrens zum Trainieren des neuronalen Netzwerks sind dann den Verfahrensschritten des Verfahrens zum Bestimmen des Verschleißgrades vorgelagert und selbst nicht Teil des Verfahrens zum Bestimmen des Verschleißgrades.

Weitere Ausführungsformen des Verfahrens zum Trainieren eines künstlichen neuronalen Netzwerks nach dem verbesserten Konzept folgen direkt aus den verschiedenen Ausführungsformen des Verfahrens zum Bestimmen des Verschleißgrades eines Werkzeugs nach dem verbesserten Konzept und umgekehrt.

Gemäß einem weiteren unabhängigen Aspekt des verbesserten Konzepts wird ein Analysesystem zur Bestimmung eines Verschleißgrades eines Werkzeugs angegeben. Das Analysesystem weist eine Recheneinheit auf sowie eine Speichereinheit. Auf der Speichereinheit ist ein Bilddatensatz gespeichert, welcher einen verschleißrelevanten Bereich des Werkzeugs abbildet. Die Recheneinheit ist dazu eingerichtet, unter Verwendung eines, insbesondere trainierten, künstlichen neuronalen Netzwerks, insbesondere eines faltenden neuronalen Netzwerks, jeden Bildpunkt einer Vielzahl von Bildpunkten des Bilddatensatzes jeweils einer Klasse einer vorgegebenen Menge von vorgegebenen Klassen zuzuordnen, wobei die Menge von Klassen wenigstens eine Verschleißklasse enthält. Die Recheneinheit ist außerdem dazu eingerichtet, basierend auf einem Ergebnis der Zuordnung der Bildpunkte der Vielzahl von Bildpunkten zu der jeweiligen Klasse wenigstens einen Kennwert für den Verschleißgrad zu bestimmen.

Die Speichereinheit kann insbesondere eines oder mehrere Speichermedien beinhalten.

Das neuronale Netzwerk ist insbesondere auf der Speichereinheit gespeichert.

Die Klassen der vorgegebenen Menge von Klassen sind beispielsweise ebenfalls auf der Speichereinheit gespeichert.

Gemäß zumindest einer Ausführungsform enthält das Analysesystem eine Ausgabeeinheit, beispielsweise eine Bildausgabeeinheit, insbesondere um ein Klassenbild oder ein anhand einer morphologischen Bildbearbeitungsoperation bearbeitetes Klassenbild an einen Benutzer des Analysesystems auszugeben.

Gemäß zumindest einer Ausführungsform weist das Analysesystem eine Mikroskopkameravorrichtung auf, die dazu eingerichtet ist, den verschleißrelevanten Bereich des Werkzeugs abzubilden, um den Bilddatensatz zu erzeugen.

Die Mikroskopkameravorrichtung oder die Recheneinheit ist insbesondere dazu eingerichtet, den Bilddatensatz auf der Speichereinheit zu speichern.

Gemäß zumindest einer Ausführungsform des Analysesystems nach dem verbesserten Konzept ist das neuronale Netzwerk mittels eines Verfahrens zum Trainieren des künstlichen neuronalen Netzwerks nach dem verbesserten Konzept trainiert worden.

Weitere Ausführungsformen des Analysesystems nach dem verbesserten Konzept erfolgen unmittelbar aus den verschiedenen Ausgestaltungen des Verfahrens zum Bestimmen des Verschleißgrades sowie des Verfahrens zum Trainieren des künstlichen neuronalen Netzwerks nach dem verbesserten Konzept und jeweils umgekehrt. Insbesondere ist das Analysesystem dazu eingerichtet oder programmiert, ein Verfahren nach dem verbesserten Konzept auszuführen oder das Analysesystem führt ein Verfahren nach dem verbesserten Konzept aus.

Gemäß einem weiteren unabhängigen Aspekt des verbesserten Konzepts wird ein Computerprogramm mit Befehlen angegeben. Die Befehle veranlassen bei Ausführung des Computerprogramms durch ein Computersystem, insbesondere durch ein Analysesystem nach dem verbesserten Konzept, beispielsweise durch die Recheneinheit des Analysesystems, das Computersystem dazu, ein Verfahren zum Bestimmen des Verschleißgrades eines Werkzeugs nach dem verbesserten Konzept durchzuführen.

Gemäß einem weiteren unabhängigen Aspekt des verbesserten Konzepts wird ein weiteres Computerprogramm mit weiteren Befehlen angegeben. Die weiteren Befehle veranlassen bei Ausführung des weiteren Computerprogramms durch ein Computersystem, insbesondere ein Analysesystem nach dem verbesserten Konzept, beispielsweise die Recheneinheit des Analysesystems, das Computersystem dazu, ein Verfahren zum Trainieren eines künstlichen neuronalen Netzwerks nach dem verbesserten Konzept durchzuführen.

Gemäß einem weiteren unabhängigen Aspekt des verbesserten Konzepts wird ein computerlesbares Speichermedium angegeben, auf dem ein Computerprogramm und/oder ein weiteres Computerprogramm nach dem verbesserten Konzept gespeichert sind.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind auch Ausführungen und Merkmalskombinationen als offenbart anzusehen, die nicht alle Merkmale eines ursprünglich formulierten unabhängigen Anspruchs aufweisen und/oder die über die in den Rückbezügen der Ansprüche dargelegten Merkmalskombinationen hinausgehend oder von diesen abweichen.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

In den Figuren zeigen:
- FIG 1: eine schematische Darstellung einer beispielhaften Ausführungsform eines Analysesystems nach dem verbesserten Konzept; und
- FIG 2: ein Ablaufdiagramm einer beispielhaften Ausführungsform eines Verfahrens zum Trainieren eines neuronalen Netzwerks nach dem verbesserten Konzept sowie ein Ablaufdiagramm einer beispielhaften Ausführungsform eines Verfahrens zum Bestimmen eines Verschleißgrades eines Werkzeugs nach dem verbesserten Konzept.

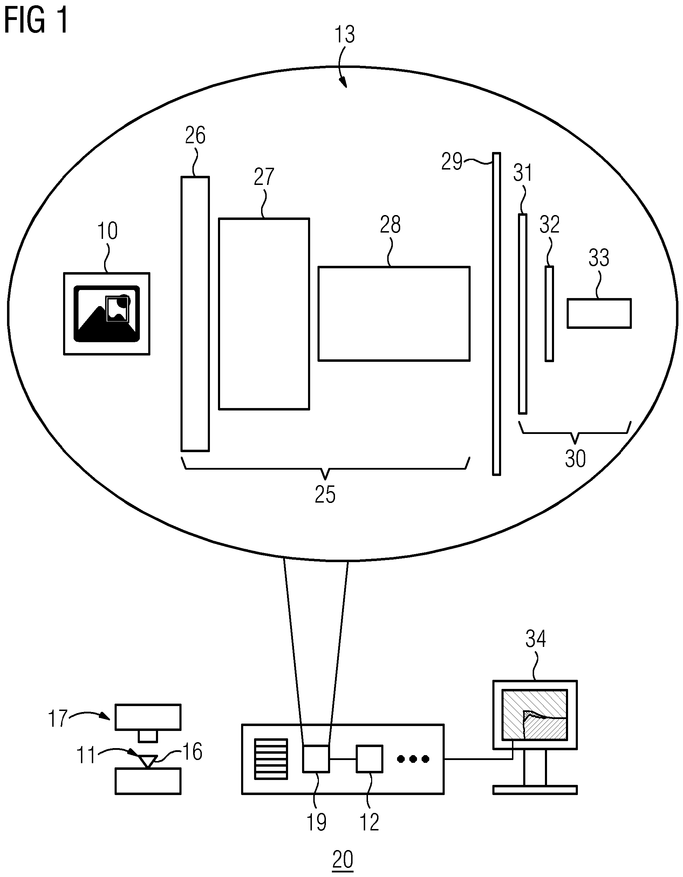

FIG 1 zeigt eine schematische Darstellung eines Analysesystems 20 nach dem verbesserten Konzept.

Das Analysesystem 20 weist eine Recheneinheit 12 auf, sowie eine mit der Recheneinheit 12 gekoppelte Speichereinheit 19.

Auf der Speichereinheit 19 ist insbesondere ein Bilddatensatz 10 gespeichert, der einen verschleißrelevanten Bereich 11 eines Werkzeugs 16 abbildet.

Des Weiteren ist auf der Speichereinheit 19 ein Softwaremodul mit einem künstlichen neuronalen Netzwerk 13 gespeichert, wobei das neuronale Netzwerk 13 insbesondere ein faltendes neuronales Netzwerk 25 enthält. Das neuronale Netzwerk 13 wird daher auch selbst als faltendes neuronales Netzwerk, CNN, bezeichnet.

Optional kann das Analysesystem 20 eine Mikroskopkameravorrichtung 17 aufweisen, mittels der das Werkzeug 16, insbesondere der verschleißrelevante Bereich 11 des Werkzeugs 16 abgebildet werden kann, um den Bilddatensatz 10 zu erzeugen.

Optional kann das Analysesystem 20 auch eine Bildausgabeeinheit 34 aufweisen, um einem Benutzer des Analysesystems 20 visuelle Ausgaben zur Verfügung zu stellen.

Bei dem Werkzeug 16 kann es sich insbesondere um ein Schneidwerkzeug für eine Werkzeugmaschine handeln. Beispielsweise kann es sich bei dem Werkzeug 16 um eine Wendeschneidplatte für eine Werkzeugmaschine handeln, beispielsweise für eine Drehmaschine oder eine Fräsmaschine. Der verschleißrelevante Bereich 11 des Werkzeugs 16 entspricht dann insbesondere einer Schneide oder einem Teil einer Schneide des Werkzeugs 16.

Das verbesserte Konzept, insbesondere das Analysesystem oder des Verfahren nach dem verbesserten Konzept, ist jedoch nicht auf Schneidwerkzeuge oder gar auf Wendeschneidplatten beschränkt. Für andere Werkzeugarten gelten die beschriebenen Schritte und Ausführungsformen analog.

Im Folgenden wird eine beispielhafte Architektur und Topologie des neuronalen Netzwerks 13 beschrieben, die sich zur Anwendung in einem Analysesystem 20 beziehungsweise einem Verfahren nach dem verbesserten Konzept eignet. Es können jedoch gegebenenfalls auch andere Architekturen eingesetzt werden.

Das in FIG 1 dargestellte neuronale Netzwerk 13 weist drei aufeinanderfolgende Faltungsebenen 26, 27, 28 auf. Jede Faltungsebene 26, 27, 28 enthält dabei beispielsweise eine Faltungsschicht im eigentlichen Sinn, gefolgt von einer Aktivierungsfunktion, insbesondere Gleichrichter- oder Rectifier-Aktivierungsfunktion, die auch als Rectified Linear Unit-Aktivierungsfunktion, kurz RELU-Aktivierungsfunktion bezeichnet werden kann, sowie weiterhin gefolgt von einer Pooling-Schicht. Die Pooling-Schicht kann beispielsweise zum Durchführen eines 2x2 Maximalwertpoolings oder eines 2x2 Durchschnittswertspoolings ausgestaltet sein.

Die einzelnen Faltungsebenen 26, 27, 28 beziehungsweise deren Faltungsschichten im eigentlichen Sinn können beispielsweise jeweils eine unterschiedliche Anzahl von Filtern realisieren. Dabei kann die Anzahl der Filter beispielsweise von der ersten Faltungsebene 26 über die zweite Faltungsebene 27 hin zur dritten Faltungsebene 28 zunehmen. Insbesondere kann die Anzahl der Filter der zweiten Faltungsebene 27 doppelt so groß sein wie die Anzahl der Filter der ersten Faltungsebene 26 und halb so groß wie die Anzahl der Filter der dritten Faltungsebene 28.

Eine Ausgabe der dritten Faltungsebene 28 beziehungsweise des CNN 25 ist im Allgemeinen mehrdimensional. In einer dem CNN folgenden Flatten-Schicht 29 wird die Ausgabe des CNN 25 in einen eindimensionalen Merkmalsvektor überführt.

Der Flatten-Schicht 29 ist beispielsweise ein konventionelles neuronales Netzwerk 30 nachgeschaltet. Das neuronale Netzwerk 30 enthält beispielsweise einen Klassifizierer mit beispielsweise zwei versteckten Ebenen 31, 32, insbesondere Dense-Schichten 31, 32. Die Dense-Schichten 31, 32 können insbesondere einen Mehrschichtperzeptor bilden.

Das neuronale Netzwerk 30 weist beispielsweise außerdem eine den Dense-Schichten 31, 32 nachgeschaltete Ausgabeschicht 33 auf. Zur Einteilung kann beispielsweise eine Softmaxfunktion verwendet werden.

Ein so konstruiertes neuronales Netzwerk 13 kann einer Eingabe, welche beispielsweise einem Teil des Bilddatensatzes 10 entspricht, eine Klasse aus einer vorgegebenen Menge von Klassen zuordnen.

In der Ausgabeschicht 33 befindet sich insbesondere ein künstliches Neuron für jede Klasse der vorgegebenen Menge von Klassen, bei fünf Klassen also entsprechend fünf Neuronen.

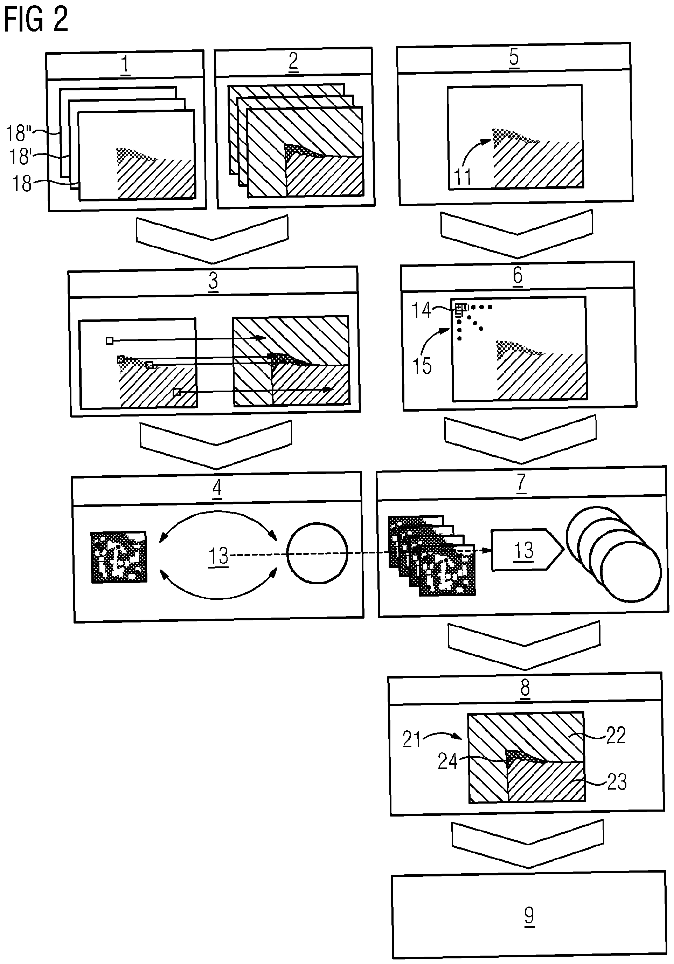

Die Funktion des Analysesystems 20 wird im Folgenden unter Bezugnahme auf FIG 2 anhand der dort beschriebenen Verfahren nach dem verbesserten Konzept näher erläutert.

In FIG 2 ist ein Ablaufdiagramm eines Verfahrens zum Trainieren eines neuronalen Netzwerks 13 zur Bestimmung eines Verschleißgrades eines Werkzeugs 16 nach dem verbesserten Konzept dargestellt. Insbesondere sind Verfahrensschritte 1 bis 4 gezeigt, die das Verfahren zum Trainieren des künstlichen neuronalen Netzwerks 13 darstellen. Des Weiteren ist ein Ablaufdiagramm eines Verfahrens zum Bestimmen eines Verschleißgrades eines Werkzeugs 16 nach dem verbesserten Konzept dargestellt, insbesondere durch die Verfahrensschritte 5 bis 9. Im Folgenden wird angenommen, dass das Analysesystem 20 sowohl für die Trainingsphase also zum Durchführen des Verfahrens zum Trainieren des neuronalen Netzwerks 13, als auch für die operative Phase, also zum Durchführen des Verfahrens zum Bestimmen des Verschleißgrades des Werkzeugs 16 verwendet wird. Dies ist jedoch nicht notwendig, da die Trainingsphase unabhängig von der operativen Phase ist.

In Schritt 1 des Verfahrens zum Trainieren des neuronalen Netzwerks 13 wird ein Trainingsbilddatensatz 18 bereitgestellt, der den verschleißrelevanten Bereich eines Referenzwerkzeugs abbildet. Bei dem Referenzwerkzeug handelt es sich beispielsweise um ein Werkzeug derselben Art oder vergleichbarer Art wie dasjenige Werkzeug 16, dessen Verschleißgrad im operativen Betrieb bestimmt werden soll.

Der Trainingsbilddatensatz 18 wird insbesondere hochauflösend dargestellt. Beispielsweise kann die Kante Referenzwerkzeugs mit einer Auflösung von mindesten 100 Bildpunkten pro Millimeter bereitgestellt werden. In Schritt 2 des Verfahrens wird eine Referenzzuordnung jedes Bildpunkts des Trainingsbilddatensatzes 18 zu einer Klasse einer vorgegebenen Menge von Klassen bereitgestellt. Mit anderen Worten wird ein Datensatz aus Paaren von Verschleißbildern und zugehörigen Klassen je Bildpunkt oder Pixel bereitgestellt.

Mittels der Recheneinheit 12 wird das untrainierte oder teilweise trainierte neuronale Netzwerk 13 nacheinander auf jeden Bildpunkt inklusive einer vordefinierten Umgebung des jeweiligen Bildpunkts angewandt. Die Recheneinheit 12 vergleicht die jeweilige Ausgabe des neuronalen Netzwerks 13 mit der entsprechenden Referenzzuordnung.

Um die Zusammenhänge zwischen den Eingangsdaten, also dem Trainingsbilddatensatz 18 und den Ausgangswerten, also den zugehörigen Klassen, zu lernen, wird das neuronale Netzwerk 13 von der Recheneinheit 12 im Schritt 4 des Verfahrens angepasst, insbesondere werden die entsprechenden Gewichte des neuronalen Netzwerks, insbesondere des CNN 25, derart angepasst, dass der Fehler zwischen Eingangsdaten und Ausgangswerten reduziert wird. Die beschriebenen Schritte werden für eine Vielzahl von weiteren Trainingsbild-datensätzen 18', 18" wiederholt, bis das neuronale Netzwerk 13 ausreichend trainiert wurde, der Fehler bei der Zuordnung also in einem vorgegebenen akzeptablen Toleranzbereich liegt.

In einer beispielhaften Ausführungsform kann die Menge von vorgegebenen Klassen beispielsweise fünf Klassen beinhalten, wobei beispielsweise drei der fünf Klassen Verschleißklassen sind. Eine Verschleißklasse stellt dabei insbesondere eine typische Art von Verschleiß des Werkzeugs 16 dar. Im Falle eines Schneidwerkzeugs kann eine erste Verschleißklasse beispielsweise eine Flächenverschleißklasse sein, also einen oberflächlichen Verschleiß auf dem Werkzeug 16 darstellen. Eine zweite Verschleißklasse kann eine Furchenklasse (auch "Groove-Klasse") sein, die grabenförmige, furchenförmige oder rillenförmige Verschleißmerkmale darstellt. Eine dritte Verschleißklasse kann eine Aufbauschneide-Klasse (auch "Buildup-edge-Klasse") sein, die Verschleißmerkmale darstellt, die durch eine Akkumulation von Werkstückmaterial auf dem Werkzeug entstehen, also sogenannte Aufbauschneiden.

Als weitere Klasse kann eine Hintergrundklasse verwendet werden, die einem Bildpunkt beispielsweise zugeordnet wird, wenn dieser nicht auf Werkzeugoberfläche liegt.

In anderen Ausführungsformen können andere Klassentypen, bei anderen Werkzeugarten insbesondere auch andere Verschleißklassen, vorteilhaft sein.

Für die Trainingsphase ist mit Vorteil ein vielfältiger Datensatz bestehend aus Werkzeugbildern und den jeweiligen Klassen verfügbar. Es werden beispielsweise Bilder von verschiedenen Werkzeugen, insbesondere von verschiedenen Formen und Materialien, beispielsweise bei unterschiedlichem Abnutzungsgrad sowie unter verschiedenen Belichtungsverhältnissen analysiert. Dadurch ist das trainierte CNN besonders robust gegenüber Störeinflüssen wie einer abweichenden Beleuchtung.

In Schritt 5 des Verfahrens zum Bestimmen des Verschleißgrades wird ein Bilddatensatz 10 zur Verfügung gestellt, insbesondere auf der Speichereinheit 19 gespeichert, der den verschleißrelevanten Bereich 11 des Werkzeugs 16 abbildet, also insbesondere eine Schneide des Werkzeugs 16.

Der Bilddatensatz 10 kann dabei insbesondere mittels der Mikroskopkameravorrichtung 17 erzeugt werden.

Der Bilddatensatz 10 wird danach in Schritt 6 des Verfahrens pixelweise, also Bildpunkt für Bildpunkt, analysiert, indem der Bilddatensatz 10 in einzelne Bildbereiche 15 aufgeteilt wird. Jeder Bildbereich 15 kann dabei einen Bildpunkt 14 beinhalten, dem eine Klasse mittels des neuronalen Netzwerks 13 zugeordnet werden soll, sowie diesen Bildpunkt 14 umgebende weitere Bildpunkte, unmittelbar an den Bildpunkt 14 angrenzende weitere Bildpunkte. Im Falle einer Rasteranordnung aus Zeilen und Spalten würde der Bilddatensatz 10 beispielsweise in Bildbereiche mit jeweils 3x3, also neun, Bildpunkten aufgeteilt.

In Schritt 7 des Verfahrens wendet die Recheneinheit 12 das trainierte neuronale Netzwerk 13 auf jeden Bildpunkt 14 an, indem es den jeweiligen Bildbereich 15 als Eingabe für das neuronale Netzwerk 13 verwendet und entsprechend dem jeweiligen Bildbereich 15 und damit dem betrachteten Bildpunkt 14 eine der Klassen zuordnet.

Nach der Bewertung aller Bildpunkte in dieser Weise erfolgt in Schritt 7 optional eine Nachbearbeitung zur Reduktion von Signalrauschen. Dabei kann mittels der Recheneinheit 12 eine Opening-Operation, also eine Erosionsoperation gefolgt von einer Dilatationsoperation, auf das klassifizierte Bild angewandt werden. Die Opening-Operation kann auch mehrfach, beispielsweise dreimal, hintereinander ausgeführt werden.

In einer beispielhaften Ausführungsform wird für die Opening-Operation ein rechteckiger Kernel, beispielsweise der Größe 12x8 Bildpunkte, verwendet.

In Schritt 8 ist das bereinigte Klassenbild 21 schematisch dargestellt. Bildpunkte, die nach der Bearbeitung der Hintergrundklasse zugeordnet sind, sind mit 22 bezeichnet. Mit 23 sind Bildpunkte bezeichnet, die nach der Nachbearbeitung der Klasse für die unbeschädigte Werkzeugoberfläche zugeordnet wurden. Mit 24 sind diejenigen Bildpunkte bezeichnet, die einer der Verschleißklassen zugeordnet wurden. Das bereinigte Klassenbild 21 kann beispielsweise einem Benutzer zur besseren Nachvollziehbarkeit auf der Anzeigeeinheit 34 angezeigt werden.

Im so bereinigten Bild kann in Schritt 9 des Verfahrens mittels der Recheneinheit 12 wenigstens ein Kennwert für den Verschleißgrad des Werkzeugs 16 bestimmt werden. Dazu kann beispielsweise die gesamte Verschleißfläche als die Anzahl oder der Anteil derjenigen Bildpunkte bestimmt werden, die einer der Verschleißklassen zugeordnet wurden.

Optional kann auch eine maximale und/oder mittlere Verschleißmarkenbreite und/oder ein Median der Verschleißmarkenbreite bestimmt werden. Dazu kann das bereinigte Klassenbild beispielsweise derart orientiert werden, dass die Oberseite des verschleißrelevanten Bereichs 11 horizontal ausgerichtet ist. Dann kann mittels der Recheneinheit 12 für jede Spalte die Anzahl der Bildpunkte, die den Verschleißklassen zugeordnet wurden, als Verschleißmarkenbreite bestimmt werden. Anschließend kann beispielsweise der Maximalwert, der Mittelwert oder beziehungsweise der Medianwert der Verschleißmarkenbreiten berechnet werden.

Die Umrechnung von Bildpunkten zu SI-Einheiten kann anhand einer einmaligen Kalibrierung durchgeführt werden. Dazu kann ein Bild mit Marken fest definierten Abstands aufgenommen werden, beispielsweise ein Gitter mit Linienabstand von 1 mm oder dergleichen, und der Abstand der Marken in Bildpunkten bestimmt werden, sodass der Zusammenhang zwischen SI-Einheiten und Bildpunktgröße hergestellt werden kann.

Die so bestimmten Kennwerte für den Verschleißgrad, also Verschleißfläche, maximale oder mittlere Verschleißmarkenbreite beziehungsweise der Median der Verschleißmarkenbreite, können mit zugehörigen vordefinierten Grenzwerten, die beispielsweise dem maximalen Verschleiß entsprechen, verglichen werden. Ist ein Grenzwert überschritten, kann das Werkzeug 16 ausgewechselt werden. Dazu kann die Recheneinheit 12 beispielsweise auf der Anzeigeeinheit 34 eine entsprechende visuelle Ausgabe erzeugen. Anderenfalls kann der aktuelle Zustand des Werkzeugs 16 beziehungsweise die verbleibende Einsatzzeit ausgegeben werden.

Die jeweilige Information kann zum einen beispielsweise an eine Steuerung der Werkzeugmaschine zurückgemeldet werden. Zum anderen kann die Information auf einem lokalen Edge Gerät und/oder an eine Cloud gesendet werden, um dort einen Einblick in den aktuellen Prozesszustand zu ermöglichen und so weiterführende Analysen, beispielsweise zum Einfluss von Materialcharge oder Maschinenparameter auf den resultierenden Verschleiß zu ermöglichen.

Ein Verfahren nach dem verbesserten Konzept bietet zudem die Möglichkeit, die Akzeptanz von Verfahren des maschinellen Lernens und der künstlichen Intelligenz in industriellen Umgebungen zu steigern, da nicht nur abstrakte Werte bestimmt werden, sondern ein klassifiziertes Bild als Zwischenschritt erstellt wird. Dieses kann zum Nachvollziehen der getroffenen Entscheidungen durch Überlagerung des Kamerabildes mit dem erkannten Verschleißbereich einem Maschinenbediener über eine Ausgabeschnittstelle, beispielsweise einem externen Tablet-Computer, dargestellt werden.

Die direkte Verschleißmessung anhand der Bilddaten ist weniger anfällig gegenüber Signalrauschen und Störeinflüssen aus der Umwelt, als dies bei indirekten Messverfahren der Fall ist. Die Verwendung von Deep Learning Konzepten in der Form eines CNN zeichnet sich durch ein besonders robustes Verhalten aus. Das verwendete Verfahren lässt den Verschleiß als solches in Bildern erkennen, unabhängig von der Schneidengeometrie, dem Werkzeugmaterial oder einer Beschichtung des Werkzeugs.

Das verbesserte Konzept lässt sich auch zur Auswertung von Bildern anwenden, welche unter unterschiedlichen Belichtungsverhältnissen aufgenommen werden.

Ein weiterer Vorteil des verbesserten Konzepts ist dessen Durchgängigkeit, die sich sowohl an der Werkzeugmaschine selbst zeigt als auch eine Verbindung zur Cloud und somit globale Analysen ermöglicht.

Die mittels des verbesserten Konzepts gewonnene Information über den Verschleißgrad des Werkzeugs erlaubt eine genauere Bestimmung der verbleibenden Einsatzzeit des Werkzeugs und somit eine Optimierung der Produktqualität beziehungsweise eine Reduzierung der Herstellungskosten durch effizientere Ausnutzung von Werkzeugen.

## Patentansprüche

1. Computerimplementiertes Verfahren zur Bestimmung eines Verschleißgrades eines Werkzeugs (16), wobei ein Bilddatensatz (10) bereitgestellt wird, welcher einen verschleißrelevanten Bereich (11) des Werkzeugs (16) abbildet,
wobei mittels einer Recheneinheit(12) unter Verwendung eines künstlichen neuronalen Netzwerks (13) jedem Bildpunkt (14) einer Vielzahl von Bildpunkten des Bilddatensatzes (10) eine Klasse einer vorgegebenen Menge von Klassen zugeordnet wird, wobei die Menge von Klassen wenigstens eine Verschleißklasse enthält; und basierend auf einem Ergebnis der Zuordnung wenigstens ein Kennwert für den Verschleißgrad bestimmt wird, **dadurch gekennzeichnet, dass** mittels der Recheneinheit (12) für eine Spalte oder eine Zeile von Bildpunkten der Vielzahl von Bildpunkten ein weiterer Anteil von Bildpunkten bestimmt wird, die der wenigsten einen Verschleißklasse zugeordnet wurden;
basierend auf dem weiteren Anteil eine Verschleißmarkenbreite der Spalte oder Zeile bestimmt wird; und
ein weiterer Kennwert basierend auf der Verschleißmarkenbreite bestimmt wird.

2. Verfahren nach Anspruch 1,
**dadurch gekennzeichnet, dass** mittels der Recheneinheit (12) für jeden der Bildpunkte (14) das neuronale Netzwerk (13) auf einen Umgebungsbereich (15) des jeweiligen Bildpunkts (14) angewandt wird, um den jeweiligen Bildpunkt (14) einer der Klassen zuzuordnen.

3. Verfahren nach Anspruch 2,
**dadurch gekennzeichnet, dass**
der Umgebungsbereich (15) den jeweiligen Bildpunkt (14) sowie alle an den jeweiligen Bildpunkt (14) angrenzenden Bildpunkte enthält; oder
der Umgebungsbereich (15) den jeweiligen Bildpunkt (14) sowie alle übrigen Bildpunkte enthält, die einen Abstand zu dem jeweiligen Bildpunkt (14) haben, der kleiner ist, als ein vorgegebener Maximalabstand; oder
der Umgebungsbereich (15) den jeweiligen Bildpunkt (14) sowie alle übrigen Bildpunkte enthält, die einen Zeilenabstand zu dem jeweiligen Bildpunkt (14) haben, der kleiner ist, als ein vorgegebener maximaler Zeilenabstand und einen Spaltenabstand zu dem jeweiligen Bildpunkt (14) haben, der kleiner ist, als ein vorgegebener maximaler Spaltenabstand.

4. Verfahren nach einem der Ansprüche 1 bis 3,
**dadurch gekennzeichnet, dass** mittels der Recheneinheit (12) das Ergebnis der Zuordnung anhand einer morphologischen Bildverarbeitungsoperation bearbeitet wird; und
der wenigstens eine Kennwert für den der Verschleißgrad basierend auf dem bearbeiteten Ergebnis bestimmt wird.

5. Verfahren nach einem der Ansprüche 1 bis 4,
**dadurch gekennzeichnet, dass** mittels der Recheneinheit (12) ein Anteil von Bildpunkten bestimmt wird, die der wenigsten einen Verschleißklasse zugeordnet wurden; und
basierend auf dem Anteil eine Verschleißfläche als Kennwert für den Verschleißgrad bestimmt wird.

6. Verfahren nach einem der Ansprüche 1 bis 5,
**dadurch gekennzeichnet, dass** mittels der Recheneinheit (12) für wenigstens eine weitere Spalte oder Zeile von Bildpunkten der Vielzahl von Bildpunkten ein jeweiliger weiterer Anteil von Bildpunkten bestimmt wird, die der wenigsten einen Verschleißklasse zugeordnet wurden;
basierend auf den jeweiligen weiteren Anteilen eine jeweilige weitere Verschleißmarkenbreite der jeweiligen weiteren Spalte oder Zeile bestimmt wird; und
der weitere Kennwert basierend auf der Verschleißmarkenbreite und den weiteren Verschleißmarkenbreiten bestimmt wird.

7. Verfahren nach einem der Ansprüche 1 bis 6,
**dadurch gekennzeichnet, dass**
der verschleißrelevante Bereich (11) mittels einer Kamera (17) abgebildet wird, um den Bilddatensatz (10) zu erzeugen und bereitzustellen.

8. Verfahren nach einem der Ansprüche 1 bis 7,
**dadurch gekennzeichnet, dass** mittels der Recheneinheit (12) ein der wenigstens eine Kennwert mit wenigstens einem vorgegebenen Grenzwert verglichen wird; und
ein eine verbleibende Einsatzzeit des Werkzeugs (16) betreffender Wert abhängig von einem Ergebnis des Vergleichs bestimmt wird.

9. Verfahren nach einem der Ansprüche 1 bis 8,
**dadurch gekennzeichnet, dass**
das neuronale Netzwerk (13) mittels eines Verfahrens trainiert wird oder wurde, wobei ein Trainingsbilddatensatz (18) bereitgestellt wird, welcher einen verschleißrelevanten Bereich (11) eines Referenzwerkzeugs abbildet,
**dadurch gekennzeichnet, dass**
eine Referenzzuordnung jedes Bildpunkts (14) einer Vielzahl von Bildpunkten des Trainingsbilddatensatzes (18) zu einer Klasse einer vorgegebenen Menge von Klassen bereitgestellt wird, wobei die Menge von Klassen wenigstens eine Verschleißklasse enthält; und
mittels einer Trainingsrecheneinheit für jeden der Bildpunkte eine Ausgabe des neuronalen Netzwerks (13) berechnet wird und die Ausgabe mit der Referenzzuordnung verglichen wird; und mittels der Trainingsrecheneinheit das neuronale Netzwerk (13) abhängig von einem Ergebnis des Vergleichs angepasst wird, um das neuronale Netzwerk (13) zu trainieren.

10. Computerprogramm mit Befehlen, welche bei Ausführung des Computerprogramms durch ein Computersystem das Computersystem dazu veranlassen, ein Verfahren nach einem der Ansprüche 1 bis 9 durchzuführen.

## Claims

1. Computer-implemented method for determining a level of wear of a tool (16), wherein an image data set (10) is provided that maps a wear-relevant region (11) of the tool (16),
wherein by means of a computing unit (12) and using an artificial neural network (13) a class of a predetermined quantity of classes is allocated to each image point (14) of a plurality of image points of the image data set (10), wherein the quantity of classes includes at least one wear class; and based on a result of the allocation at least one characteristic value is determined for the level of wear,
**characterised in that** by means of the computing unit (12) a further proportion of image points, which have been allocated to the at least one wear class, is determined for a column or a row of image points of the plurality of image points;
a wear mark width of the column or row is determined based on the further proportion; and
a further characteristic value is determined based on the wear mark width.

2. Method according to claim 1,
**characterised in that** the neural network (13) is applied by means of the computing unit (12) for each of the image points (14) to a surrounding area (15) of the respective image point (14) in order to allocate the respective image point (14) to one of the classes.

3. Method according to claim 2,
**characterised in that**
the surrounding area (15) includes the respective image point (14) and also all the image points that adjoin the respective image point (14); or
the surrounding area (15) includes the respective image point (14) and also all the remaining image points that have a spacing with respect to the respective image point (14) and said spacing is smaller than a predetermined maximum spacing, or
the surrounding area (15) includes the respective image point (14) and also all the remaining image points that have one row spacing with respect to the respective image point (14) and said row spacing is smaller than a predetermined maximum row spacing, and said image points have one column spacing with respect to the respective image point (14) and said column spacing is smaller than a predetermined maximum column spacing.

4. Method according to one of claims 1 to 3,
**characterised in that** the result of the allocation is processed by means of the computing unit (12) with the aid of a morphologic image processing operation; and
the at least one characteristic value for the level of wear is determined based on the processed result.

5. Method according to one of claims 1 to 4,
**characterised in that** a proportion of the image points that have been allocated to the at least one wear class is determined by means of the computing unit (12) and
a wear area is determined based on the proportion as a characteristic value for the level of wear.

6. Method according to one of claims 1 to 5,
**characterised in that** by means of the computing unit (12) a respective further proportion of image points, which have been allocated to the at least one wear class, is determined for at least one further column or row of image points of the plurality of image points;
a respective further wear mark width of the respective further column or row is determined based on the respective further proportions; and
the further characteristic value is determined based on the wear mark width and the further wear mark widths.

7. Method according to one of claims 1 to 6,
**characterised in that**
the wear-relevant region (11) is mapped by means of a camera (17) in order to generate and to provide the image data set (10) .

8. Method according to one of claims 1 to 7,
**characterised in that** one of the at least one characteristic value is compared with at least one predetermined limit value by means of the computing unit (12); and
a value that relates to a remaining use time of the tool (16) is determined in dependence upon a result of the comparison.

9. Method according to one of claims 1 to 8,
**characterised in that**
the neural network (13) is or has been trained by means of a method, wherein a training image data set (18) is provided that maps a wear-relevant region (11) of a reference tool,
**characterised in that**
a reference allocation of each image point (14) of a plurality of image points of the training image data set (18) to a class of a predetermined quantity of classes is provided, wherein the quantity of classes includes at least one wear class; and by means of a training computing unit, an output of the neural network (13) is calculated for each of the image points and the output is compared with the reference allocation; and
by means of the training computing unit, the neural network (13) is adapted in dependence upon a result of the comparison in order to train the neural network (13).

10. Computer program having commands and when the computer program is implemented by a computer system, the commands trigger the computer system so as to implement a method according to one of claims 1 to 9.

## Revendications

1. Procédé mis en œuvre par ordinateur de détermination d'un degré d'usure d'un outil (16), dans lequel on se procure un ensemble (10) de données d'image, qui représente une partie (11) de l'outil (16) pertinente pour l'usure,
dans lequel, au moyen d'une unité (12) de calcul et en utilisant un réseau (13) neuronal artificiel, on affecte à chaque pixel (14) d'une pluralité de pixels de l'ensemble (10) de données d'image une classe parmi un ensemble donné à l'avance de classes, l'ensemble des classes contenant au moins une classe d'usure, et sur la base d'un résultat de l'affectation, on détermine au moins une valeur caractéristique du degré d'usure, **caractérisé en ce qu'**au moyen de l'unité (12) de calcul, on détermine, pour une colonne ou une ligne de pixels de la pluralité de pixels, une autre proportion de pixels, qui a été affectée à la au moins une classe d'usure ;
sur la base de l'autre proportion, on détermine une largeur de marque d'usure de la colonne ou de la ligne ; et
on détermine une autre valeur caractéristique sur la base de la largeur de marque d'usure.

2. Procédé suivant la revendication 1,
**caractérisé en ce que**, au moyen de l'unité (12) de calcul, on applique, pour chacun des pixels (14), le réseau (13) neuronal à une partie (15), qui entoure le pixel (14) respectif, pour affecter le pixel (14) respectif à l'une des classes.

3. Procédé suivant la revendication 2,
**caractérisé en ce que** la partie (15), qui entoure, contient le pixel (14) respectif ainsi que tous les pixels voisins du pixel (14) respectif ; ou
la partie (15), qui entoure, contient le pixel (14) respectif ainsi que tous les autres pixels, qui sont à une distance du pixel (14) respectif, qui est plus petite qu'une distance maximum donnée à l'avance ; ou
la partie (15), qui entoure, contient le pixel (14) respectif ainsi que tous les autres pixels, qui ont une distance de ligne au pixel (14) respectif, qui est plus petite qu'une distance entre lignes maximum donnée à l'avance et une distance entre colonnes au pixel (14) respectif, qui est plus petite qu'une distance entre colonnes maximum donnée à l'avance.

4. Procédé suivant l'une des revendications 1 à 3,
**caractérisé en ce que**, au moyen de l'unité (12) de calcul, on traite le résultat de l'affectation, à l'aide d'une opération morphologique de traitement d'image ; et
on détermine la au moins une valeur caractéristique du degré d'usure sur la base du résultat obtenu par le traitement.

5. Procédé suivant l'une des revendications 1 à 4,
**caractérisé en ce que** l'on détermine, au moyen de l'unité (12) de calcul, une proportion de pixels, qui sont affectés à au moins une classe d'usure ; et
on détermine, sur la base de la proportion, une surface d'usure comme valeur caractéristique du degré d'usure.

6. Procédé suivant l'une des revendications 1 à 5,
**caractérisé en ce que**, au moyen de l'unité (12) de calcul, on détermine pour au moins une autre colonne ou ligne de pixels de la pluralité de pixels, une autre proportion respective de pixels, qui ont été affectés à la au moins une classe d'usure ;
sur la base des autres proportions respectives, on détermine une autre largeur de marque d'usure respective de l'autre colonne ou ligne respective ; et
on détermine l'autre valeur caractéristique sur la base de la largeur de marque d'usure et des autres largueurs de marque d'usure.

7. Procédé suivant l'une des revendications 1 à 6,
**caractérisé en ce que** l'on reproduit la partie (11) pertinente pour l'usure au moyen d'une caméra (17), afin de produire l'ensemble (10) de données d'image et d'en disposer.

8. Procédé suivant l'une des revendications 1 à 7,
**caractérisé en ce que**, au moyen de l'unité (12) de calcul, on compare la au moins une valeur caractéristique à au moins une valeur limite donnée à l'avance ; et
on détermine une valeur concernant le temps d'utilisation restant de l'outil (16) en fonction d'un résultat de la comparaison.

9. Procédé suivant l'une des revendications 1 à 8,
**caractérisé en ce que** l'on fait subir un apprentissage ou on a fait subir un apprentissage au réseau (13) neuronal au moyen d'un procédé, dans lequel on met à disposition un ensemble (18) de données d'image d'apprentissage, qui représente une partie (11) d'un outil de référence pertinente pour l'usure,
**caractérisé en ce que**
on met à disposition une affectation de référence de chaque pixel (14) d'une pluralité de pixels de l'ensemble (18) de données d'image d'apprentissage à une classe d'un ensemble donné à l'avance de classes, l'ensemble de classes contenant au moins une classe d'usure ; et
au moyen d'une unité de calcul d'apprentissage, on calcule, pour chacun des pixels, une sortie du réseau (13) neuronal et on compare la sortie à l'affectation de référence ; et
au moyen de l'unité de calcul d'apprentissage, on adapte le réseau (13) neuronal en fonction d'un résultat de la comparaison, afin de faire subir un apprentissage au réseau (13) neuronal.

10. Programme d'ordinateur ayant des instructions qui, lorsque le programme d'ordinateur est réalisé par un système d'ordinateur, fait que le système d'ordinateur effectue un procédé suivant l'une des revendications 1 à 9.
